# EUROPEAN PATENT SPECIFICATION

(11) **EP 0 383 683 B1**
(45) Date of publication and mention of the grant of the patent: **03.05.1995**
(21) Application number: 90400402.5
(22) Date of filing: 14.02.1990
(51) Int. Cl.: H02K 9/06

(54) **Alternating current generator**
Wechselstromerzeuger
Génératrice à courant alternatif

(30) Priority: 15.02.1989 JP 35435/89
(43) Date of publication of application: 22.08.1990
(73) Proprietor: MITSUBISHI DENKI KABUSHIKI KAISHA, Tokyo (JP)
(72) Inventor: Kitamura, Yutaka, c/o Jigyosho Himeji, Himeji-Shi, Hyogo-Ken (JP); Katashima, Tadashi, c/o Jigyosho Himeji, Himeji-Shi, Hyogo-Ken (JP); Komurasaki, Keiichi, c/o Jigyosho Himeji, Himeji-Shi, Hyogo-Ken (JP); Yano, Tsuyoshi, c/o Jigyosho Himeji, Himeji-Shi, Hyogo-Ken (JP)
(74) Representative: Levy, David

(56) References cited:
- DE-A- 3 410 760
- FR-A- 2 494 517
- GB-A- 2 160 591
- US-A- 4 488 070

## Description

### BACKGROUND OF THE INVENTION

### Field of the Invention

This invention relates to an alternating current generator used for a vehicle or the like.

### Description of Related Art

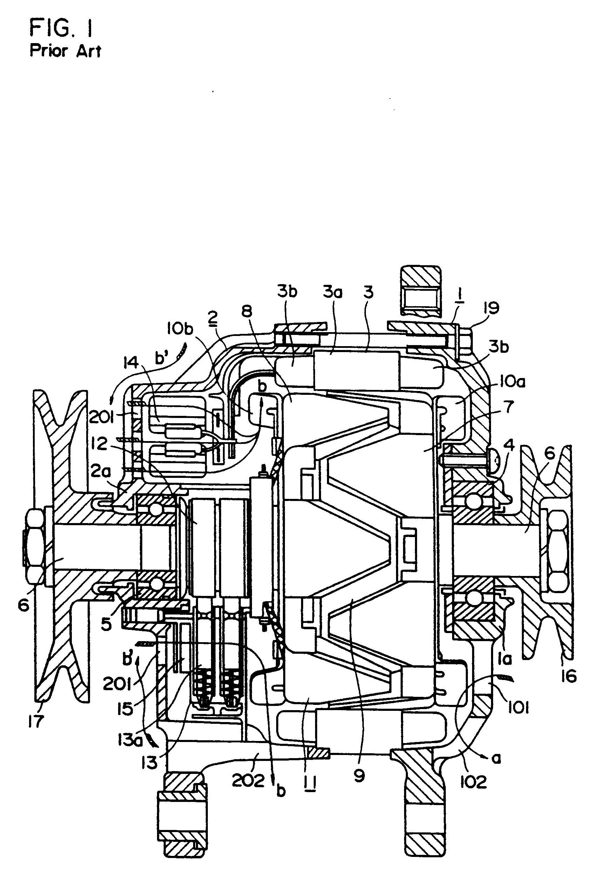

Fig. 1 is a sectional view showing the construction of a conventional alternating current generator for a vehicle, known to the Applicant and after which the preamble of Claim 1 is formed. In the figure, reference numerals 1 and 2 indicate first and second bowl-shaped covers respectively which cover the main part of the alternating current generator from both sides, and serve as brackets. The second cover 2 is a deeper bowl than the first cover 1. The first and second covers 1, 2 hold between their opening ends, a stator 3 with a ring-shaped stator core 3a wound around by stator coil along the outer periphery thereof, the covers being provided with their concaves facing each other. The first and second covers 1, 2 are tightened by bolt 19.

At the positions corresponding to the respective bowl bottoms of the first and second covers 1, 2, circular bearing boxes 1a and 2a is provided respectively. Bearings 4, 5 are respectively fitted into the bearing boxes la, 2a. The bearings 4, 5 support the shaft 6 rotatably.

A set of pole cores 7, 8 whose polarity are different from each other are fixed around the shaft 6. Pole cores 7, 8 respectively have a plurality of wedge-shaped magnetic pole pieces projecting in the axial direction of the shaft 6 around discs. The pole cores 7, 8 are so provided as the sides of the projecting magnetic pole pieces facing each other, and the magnetic pole piece of one pole core and that of the other are arranged side by side alternately. An excitation coil 9 is fixed around the shaft 6 between the pole cores 7 and 8. At the outside surface of the pole cores 7 and 8 in the axial direction of the shaft 6, fans 10a, 10b which rotate unitedly with the shaft 6 are fixed respectively. In the shaft 6 at the second cover 2 side, two slip rings 12, 12 made of metallic conduit are fitted in the state being insulated from the shaft 6. A rotor 11 is made up of the shaft 6, pole cores 7, 8, exciting coil 9, fans 10a, 10b, and slip rings 12, 12. The rotor 11 is provided inside of the inner peripheral of aforesaid stator 3.

Inside of the second cover 2, there are provided an electric current supplying unit 13 with brushes 13a, 13a inside which slidably connected the slip rings 12, 12 respectively for giving exciting current to the exciting coil 9, a rectifier (14) for rectifying induced alternating current by the stator coil 3b into direct current, and a voltage regulator 15 for detecting direct current to control the exciting current to the excitation coil 9 to regulate the output voltage to the battery to be constant.

On the first cover 1, there are provided an inlet hole 101 for drawing outside air to the inside by the rotation of aforesaid fan 10a, and a discharge hole 102 for discharging the air which has circulated the inside. At the place on the second cover 2 covering the rectifier 14 and the electric current supplying unit 13, provided an inlet hole 201 for drawing outside air to the inside by the rotation of aforesaid fan 10b, and a discharge hole 202 for discharging the air which has passed through the inside.

Around the end of the shaft 6 on the first cover 1 side, in the vicinity of the outer surface of the cover 1 is fixed a one-groove pulley 16 which transmits the rotation of an engine to the shaft 6. Around the end portion of the shaft 6 on the second cover 2 side, in the vicinity of the outer side surface of the second cover 2 is fixed one-groove pulley 17 which transmits the power to an auxiliary machine. Outer peripheral edge of the pulley 17 reaches the position corresponding to the inlet, hole 201 of the second cover 2.

Explanation will be given on how the conventional alternating current generator of the above construction operates to cool the inside thereof. The rotation of the engine is transmitted through the pulley 16 to rotate the shaft 6. When the shaft 6 rotates, the fans 10a, 10b fixed both outer surfaces of the rotor 11 rotate. By the rotation of the fans 10a, 10b, relatively cold outside air is drawn from the inlet holes 101, 201 respectively to the inside, the air passing through the inside as shown by the arrow a or b in the figure.

The drawn air shown by the arrow a is discharged from the discharge hole 102 after cooling the bearing 4, pole core 7, excitation coil 9, and stator coil 3b. The drawn air shown by the arrow b is discharged from the discharge hole 202 after cooling the voltage regulator 15 and the rectifier 14, and further, the pole core 8, excitation coil 9, and stator coil 3b.

Since the outer peripheral edge of the pulley 17 reaches the position corresponding to the inlet hole 201, however, the outside air drawn from the inlet hole 201 moves along the outer surface of the second cover 2 as indicated by an arrow b′ in the figure. As the temperature of the second cover 2 becomes higher by the heat generated inside, the temperature of the air moving along the outer surface of the second cover 2 rises by receiving the heat from the second cover 2, thereby high temperature air being drawn from the inlet hole 201.

Accordingly, there is a problem that the rectifier 14 and the voltage regulator 15 cannot be cooled sufficiently by such high temperature air.

GB-A-2 160 591 and FR-A-2 494 517 show other forms of motor vehicle generators.

### SUMMARY OF THE INVENTION

The present invention solves the problem above mentioned owing to the characterizing features recited in Claim 1.

The primary object of the invention is to provide an alternating current generator which prevents the air to be drawn for cooling the inside from being risen to the high temperature, thereby being capable to cool the inside sufficiently.

Another object of the invention is to provide an alternating current generator which prevents the cold air whose temperature has been made not to be risen from diffusing to the circumstances, and also prevents the air of high-risen temperature from being mixed with the cold air, thereby only the cold air being drawn surely to the inside.

The above and further objects and features of the invention will more fully be apparent from the following detailed description with accompanying drawings.

### BRIEF DESCRIPTION OF THE DRAWINGS

Fig. 1 is a sectional view showing the construction of a conventional alternating current generator,
Fig. 2 is a sectional view showing the construction of one embodiment of an alternating current generator of the invention,
Fig. 3 is a front view of an alternating current generator of the invention viewed from the pulley side,
Fig. 4 is a sectional view taken on line IV - IV in Fig. 3, and
Fig. 5 through Fig. 7 are sectional views showing the construction of another embodiments of an alternating current generator of the invention.

### DESCRIPTION OF THE PREFERRED EMBODIMENTS

In the following, explanation will be given on the alternating current generator of the present invention referring to the drawings.

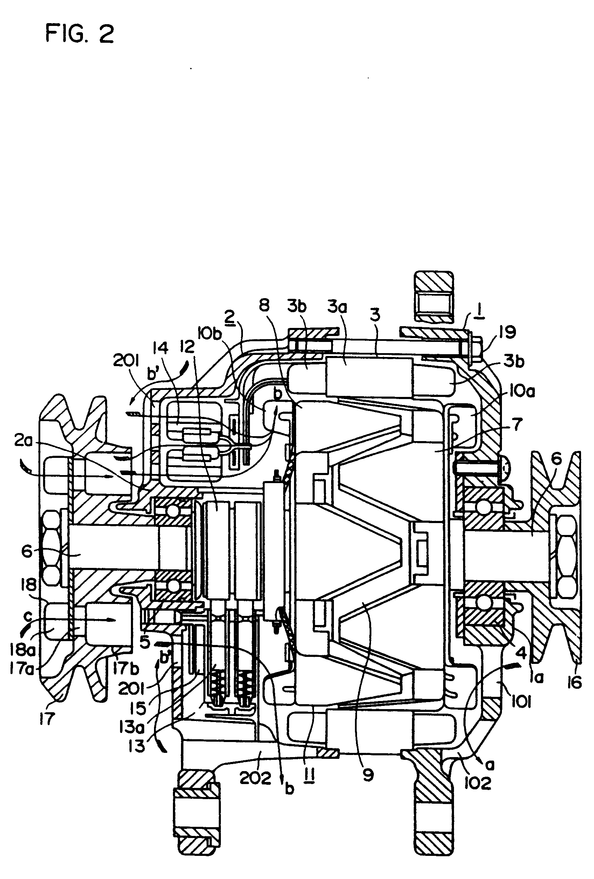

Fig. 2 is a sectional view showing the construction of one embodiment of an alternating current generator of the invention. In the figure, reference numerals 1 and 2 indicate first and second bowl-shaped covers respectively which cover the main part of the alternating current generator from both sides, and serve as brackets. The second cover 2 is a deeper bowl than the first cover 1. The first and second covers 1, 2 hold between their opening ends, a stator 3 with a ring-shaped stator core 3a wound around by stator coil along the outer periphery thereof, the covers being provided with their concaves facing each other. The first and second covers 1, 2 are tightened by bolt 19.

At the positions corresponding to the respective bowl bottoms of the first and second covers 1, 2, circular bearing boxes 1a and 2a are provided respectively. Bearings 4, 5 are respectively fitted into the bearing boxes 1a, 2a. The bearings 4, 5 support the shaft 6 rotatably.

A set of pole cores 7, 8 whose polarity are different from each other are fixed around the shaft 6. Pole cores 7, 8 respectively have a plurality of wedge-shaped magnetic pole pieces projecting in the axial direction of the shaft 6 around discs. The pole cores 7, 8 are so provided as the sides of the projecting magnetic pole pieces facing each other, and the magnetic pole piece of one pole core and that of the other are arranged side by side alternately. An excitation coil 9 is fixed around the shaft 6 between the pole cores 7 and 8. At the outside surface of the pole cores 7 and 8 in the axial direction of the shaft 6, fans 10a, 10b which rotate unitedly with the shaft 6 are fixed respectively. In the shaft 6 at the second cover 2 side, two slip rings 12, 12 made of metallic conduit are fitted in the state being insulated from the shaft 6. A rotor 11 is made up of the shaft 6, pale cores 7, 8, exciting coil 9, fans 10a, 10b, and slip rings 12, 12. The rotor 11 is provided inside of the inner peripheral of aforesaid stator 3.

Inside of the second cover 2, there are provided an electric current supplying unit 13 with brushes 13a, 13a inside which slidably connected the slip rings 12, 12 respectively for giving exciting current to the exciting coil 9, a rectifier (14) for rectifying induced alternating current by the stator coil 3b into direct current, and a voltage regulator 15 for detecting direct current to control the exciting current to the excitation coil 9 to regulate the output voltage to the battery to be constant.

On the first cover 1, there are provided an inlet hole 101 for drawing outside air to the inside by the rotation of aforesaid fan 10a, and a discharge hole 102 for discharging the air which has circulated the inside. At the place on the second cover 2 covering the rectifier 14 and the electric current supplying unit 13, provided an inlet hole 201 for drawing outside air to the inside by the rotation of aforesaid fan 10b, and a discharge hole 202 for discharging the air which has passed through the inside.

Around the end of the shaft 6 on the first cover 1 side, in the vicinity of the outer surface of the cover 1 is fixed a one-groove pulley 16 which transmits the rotation of an engine to the shaft 6. Around the end portion of the shaft 6 on the second cover 2 side, in the vicinity of the outer side surface of the second cover 2 is fixed one-groove pulley 17 which transmits the power to an auxiliary machine. Outer peripheral edge of the pulley 17 reaches the position corresponding to the inlet hole 201 of the second cover 2.

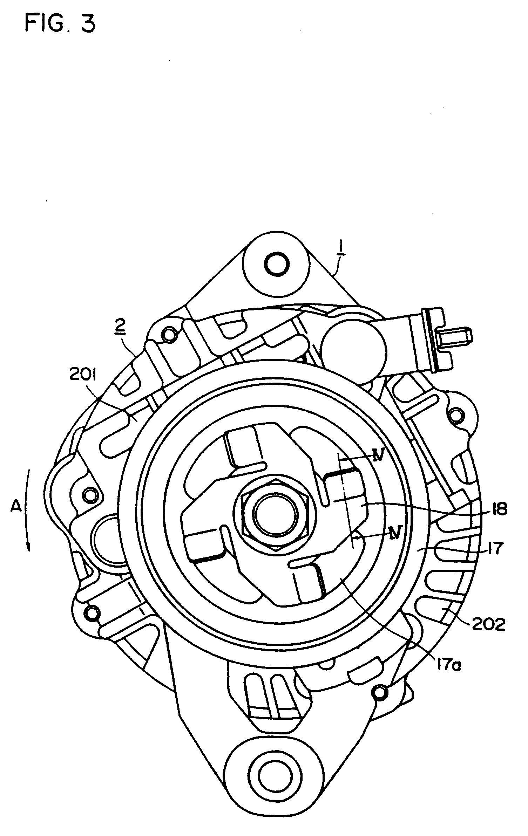

Fig. 3 is a front view of an alternating current generator of the invention viewed from the pulley 17 side. In front of the pulley 17, an axial fan 18 is fixed around the shaft 6 unitedly with the pulley 17. The axial fan 18 has four blades 18a, 18a ... whose respective tips bend up at a predetermined angle against the front surface of the pulley 17 around the axis of the pulley 17. On the pulley 17, as shown in Fig. 2, four vents 17a, 17a... penetrating in the axial direction are provided at the position corresponding to each tip of the blade 18a of the axial fan 18. At each vent 17a, a cylindrical guide 17b projecting from the pulley 17 in the direction from the vent 17a toward the inlet hole 201 of the second cover 2 is provided. The shape of the exit side opening of the guide 17b, that is, the inlet hole 201 side, is approximately the same as that of the inlet hole 201.

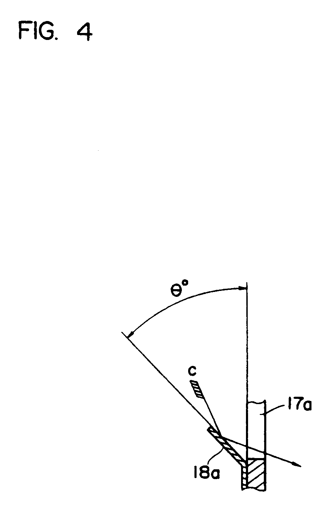

Fig. 4 is a sectional view of the axial fan 18 and the vent 17a taken on line IV - IV in Fig. 3. The tip of the blade 18a of the axial fan 18 bends back by the angle ϑ against the side surface of the pulley 17. The axial fan 18 has an effect as a fan when the bending angle ϑ is within the scope of 10° ≦ ϑ ≦ 90°. Furthermore, in scope of ϑ = 45° ± 15° , the axial fan has its best effect.

Next, operation of cooling mechanism of the alternating current generator of the invention will be described. The rotation of the engine is transmitted through the pulley 16 to rotate the shaft 6. When the shaft 6 rotates, the fans 10a, 10b fixed both outer surfaces of the rotor 11 rotate. By the rotation of the fans 10a, 10b, relatively cold outside air is drawn from the inlet holes 101, 201 respectively to the inside, the air passing through the inside as shown by the arrow a or b in the figure.

The drawn air shown by the arrow a is discharged from the discharge hole 102 after cooling the bearing 4, pole core 7, excitation coil 9, and stator coil 3b. The drawn air shown by the arrow b is discharged from the discharge hole 202 after cooling the voltage regulator 15 and the rectifier 14, and further, the pole core 8, excitation coil 9, and stator coil 3b.

The axial fan 18 rotates unitedly with the pulley 17 to the direction A as shown in Fig. 3. As shown an arrow C in Fig. 4, air is blown into the vent 17a along the surface of the tip of the blade 18a. The air blown into the vent 17a tends to scatter in the radial direction of the pulley 17 due to centrifugal force caused by the rotation of the pulley 17, when it comes out of the pulley 17, however, it is guided to the inlet hole 201 by the guide 17b. Furthermore, the guide 17b guides only the cold air to the inlet hole 201 by shutting off the air which has been heated by moving along the surface of the second cover 2 (shown by an arrow b′ in the figure) from the cold air blown out from the vent 17a.

The cold air blown in from the inlet hole 201 passes through the inside of the second cover 2 to sufficiently cool the rectifier 14 and the voltage regulator 15. In the alternating current generator of the invention, the temperature of the air (shown by an arrow b in Fig. 2) at the time of being drawn to the inside through the inlet hole 201 is about 20°C lower than that of the conventional one.

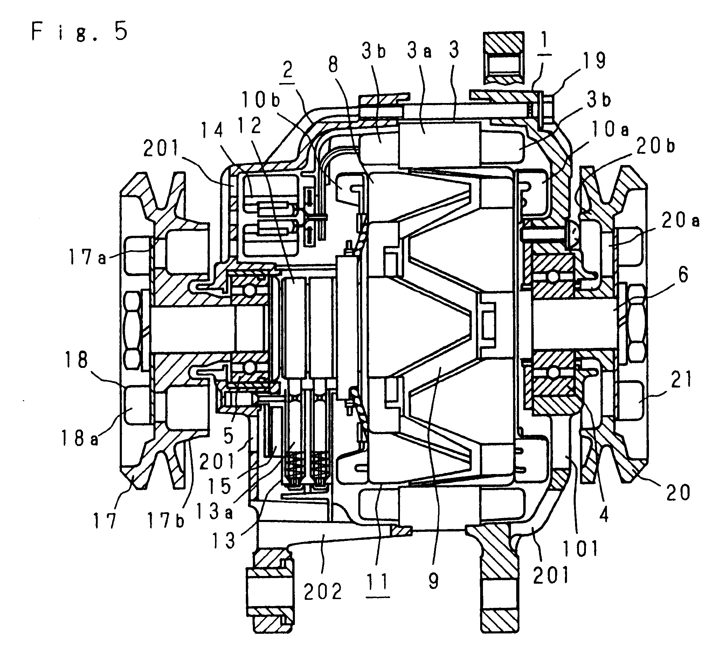

In addition, in the aforementioned embodiment, explanation has been given on the alternating current generator provided with the vent 17a, guide 17b and the axial fan 18 at the second cover 2 side, however, the one, as shown in Fig. 5, provided with a pulley 20 having a vent 20a and a guide 20b, and an axial fan 21 on the first cover 1 side is also acceptable. In this case, there is a large effect for cooling the bearing 4, excitation coil 9 and stator coil 3b.

Furthermore, in the aforementioned embodiment, explanation has been given on one-groove type pulleys 16, 17 and 20, but the invention is applicable to a plural-groove type poly-V pulley. In this case, as the poly-V pulley is relatively long in the axial direction, the vent penetrated in the axial direction also serves as a guide, thereby a guide is not necessarily provided.

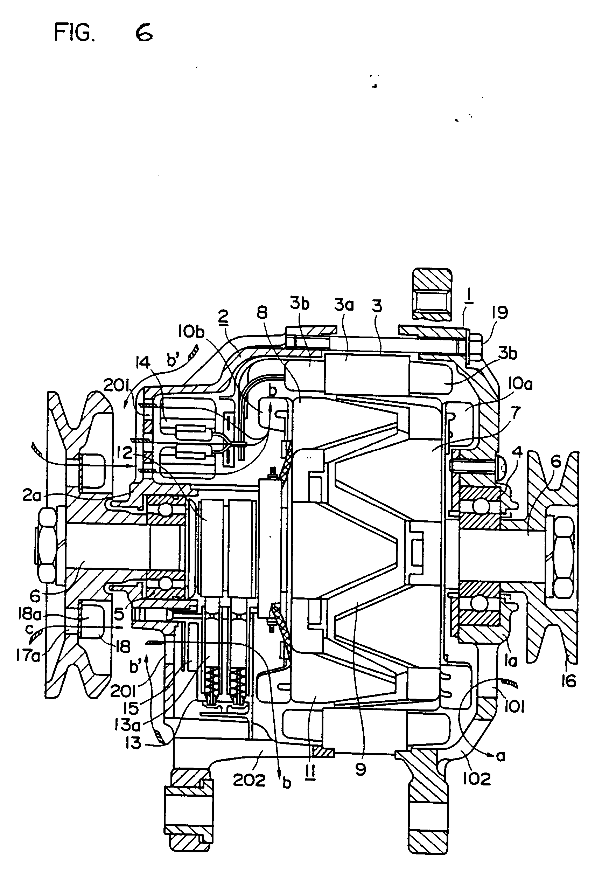

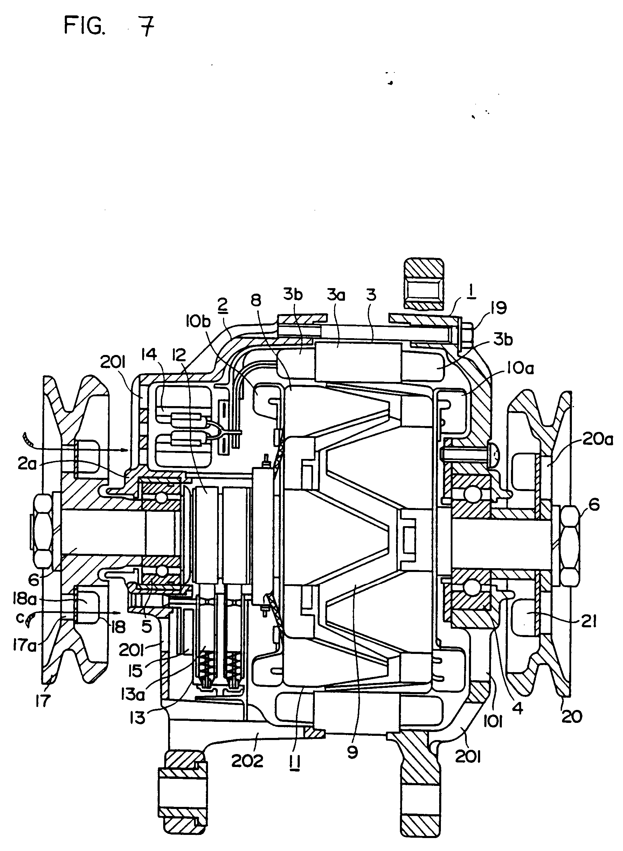

In addition, in the aforementioned embodiment, as shown in Fig. 3, the axial fan 18 or 21 is provided in front of the pulley 17 or 20, it is also possible to provide the axial fan 18 or 21 between the first cover 1 or a second cover 2 and the pulley 17 or 20 shown in Fig. 6 and Fig. 7.

## Claims

1. An alternating current generator comprising :
a stator (3) having a stator coil (3b) ;
a bracket (2) having a plurality of inlet holes (201) provided on the side thereof and a plurality of discharge holes (202) provided on the outer periphery thereof ;
a rotor (11) which is fixed to the axis of rotation (6) rotatably supported by said bracket (2) and rotates along with the axis of rotation (6) ;
a fan (10b) which is fixed to said rotor (11) and draws air from said inlet holes (201) and discharges it from said discharge holes (202) thereby to ventilate and cool the inside ;
a rectifier (14) for rectify AC output of said stator coil (3b) ; and
a pulley (17) which is provided outside of said bracket (2) and fixed to said axis of rotation (6),
characterized in that said pulley (17) is provided with vent(s) (17a) being axially penetrated and an axial fan (18) rotating along with said pulley (17), said rectifier (14) is provided between said axial fan (18) and said fan (10b), said axial fan (18) and said fan (10b) are arranged in series to operate and the air flow which passes through said vent(s) (17a) and said rectifier (14) and reaches to said fan (10b) cools said rectifier (14) and the inside the generator.

2. An alternating current generator as set forth in claim 1, wherein said pulley (17) is provided between said axial fan (18) and said cover (2).

3. An alternating current generator as set forth in claim 1, wherein said axial fan (18) is provided between said pulley (17) and said cover (2).

4. An alternating current generator as set forth in any of preceding claims, wherein two sets (17,18 and 20,21) of said pulley and axial fan are provided, these two sets being respectively installed at both ends of the axis of rotation (6) of said rotor (11).

5. An alternating current generator as set forth in any one of preceding claims, further comprising at least one guide member (17b) for leading external air from said axial fan (18) to at least one said hole (201).

6. An alternating current generator as set forth in claim 5, wherein the shape of the exit side opening of said guide member (17b) is approximately the same as the shape of said hole (201).

## Patentansprüche

1. Wechselstromgenerator, mit:
einem Stator (3) mit einer Statorwicklung (3b),
einem Träger (2) mit mehreren an seiner Seite vorgesehenen Einlaßlöchern (201) und mehreren an seinem Außenumfang vorgesehenen Auslaßlöchern (202),
einem Rotor (11), der an der von dem Träger (2) drehbar gelagerten Drehachse (6) befestigt ist und sich zusammen mit der Drehachse (6) dreht,
einem Ventilator (10b), der an dem Rotor (11) befestigt ist und Luft aus den Einlaßlöchern (201) ansaugt und sie aus den Auslaßlöchern (202) ausgibt, um dadurch das Innere zu ventilieren und zu kühlen,
einem Gleichrichter (14) zum Gleichrichten des Wechselstromausgangssignals der Statorwicklung (3b), und
einer Riemenscheibe (17), die außerhalb des Trägers (2) vorgesehen und an der Drehachse (6) befestigt ist,
dadurch gekennzeichnet, daß die Riemenscheibe (17) mit einem oder mehreren axial durchgehenden Luftlöchern (17a) und einem sich zusammen mit der Riemenscheibe (17) drehenden Axialventilator (18) versehen ist, wobei der Gleichrichter (14) zwischen dem Axialventilator (18) und dem Ventilator (10b) vorgesehen ist, der Axialventilator (18) und der Ventilator (10b) betriebsmäßig hintereinander angeordnet sind und der Luftstrom, der durch das eine oder die mehreren Luftlöcher (17a) und den Gleichrichter (14) hindurchströmt und den Ventilator (10b) erreicht, den Gleichrichter und das Innere des Generators kühlt.

2. Wechselstromgenerator nach Anspruch 1, bei dem die Riemenscheibe (17) zwischen dem Axialventilator (18) und der Abdeckung (2) vorgesehen ist.

3. Wechselstromgenerator nach Anspruch 1, bei dem der Axialventilator (18) zwischen der Riemenscheibe (17) und der Abdeckung (2) vorgesehen ist.

4. Wechselstromgenerator nach einem der vorhergehenden Ansprüche, bei dem zwei Sätze (17,18 und 20,21) aus Riemenscheibe und Axialventilator vorgesehen sind, wobei beide Sätze jeweils an einem der beiden Enden der Drehachse (6) des Rotors (11) installiert sind.

5. Wechselstromgenerator nach einem der vorhergehenden Ansprüche, ferner mit mindestens einem Führungsteil (17b) zum Leiten von Außenluft von dem Axialventilator (18) zu dem mindestens einen Loch (201).

6. Wechselstromgenerator nach Anspruch 5, bei dem die Form der Auslaßseitenöffnung des Führungsteils (17b) annähernd dieselbe wie die Form des Loches (201) ist.

## Revendications

1. Générateur de courant alternatif comprenant :
un stator (3) comportant un enroulement de stator (3b) ;
un couvercle (2) comportant une pluralité d'ouvertures d'entrée (201) prévues sur son côté et une pluralité d'ouvertures de sortie (202) prévues sur sa périphérie extérieure ;
un rotor (11) qui est fixé à l'arbre rotatif (6) supporté de façon tournante par ledit couvercle (2), et qui tourne en même temps que l'arbre rotatif (6) ;
un ventilateur (10b) qui est fixé audit rotor (11) et qui aspire de l'air à travers lesdites ouvertures d'entrée (201) et le rejette à travers lesdites ouvertures de sortie (202) afin de ventiler et de refroidir l'intérieur du générateur ;
un redresseur (14) pour redresser la sortie de courant alternatif dudit enroulement de stator (3b) ; et
une poulie (17) qui est située à l'extérieur du dit couvercle (2) et fixée audit arbre rotatif (6) ; caractérisé en ce que ladite poulie (17) comporte un ou plusieurs trous (17a),traversant axialement la poulie, et un ventilateur axial (18) qui tourne avec ladite poulie (17), ledit redresseur (14) est situé entre ledit ventilateur axial (18) et ledit ventilateur (10b), ledit ventilateur axial (18) et ledit ventilateur (10b) sont disposés de manière à fonctionner en série, et le flux d'air qui traverse le ou lesdits trous (17a) et ledit redresseur (14) et qui atteint ledit ventilateur (10b) refroidit ledit redresseur (14) et l'intérieur du générateur.

2. Générateur de courant alternatif suivant la revendication 1, dans lequel ladite poulie (17) est placée entre ledit ventilateur axial (18) et ledit couvercle (2).

3. Générateur de courant alternatif suivant la revendication 1, dans lequel ledit ventilateur axial (18) est placé entre ladite poulie (17) et ledit couvercle (2).

4. Générateur de courant alternatif suivant une quelconque des revendications précédentes, dans lequel il est prévu deux ensembles (17,18 et 20,21) de la dite poulie et dudit ventilateur axial, ces deux ensembles étant respectivement installés aux deux extrémités de l'arbre rotatif (6) dudit rotor (11).

5. Générateur de courant alternatif suivant une quelconque des revendications précédentes, comprenant en outre au moins un élément de guidage (17b) pour diriger l'air extérieur provenant dudit ventilateur axial (18) vers au moins une dite ouverture (201).

6. Générateur de courant alternatif suivant la revendication 5, dans lequel la configuration de l'ouverture de sortie dudit élément de guidage (17b) est approximativement la même que celle de ladite ouverture (201).
